# EUROPEAN PATENT SPECIFICATION

(11) **EP 2 834 466 B1**
(45) Date of publication and mention of the grant of the patent: **12.07.2023**
(21) Application number: 13813554.6
(22) Date of filing: 29.03.2013
(51) Int. Cl.: F02C 3/04, F02C 7/36, F02C 3/067, F02C 3/107, F01D 1/24, F01D 15/12

(54) **GEARED TURBOFAN WITH THREE TURBINES WITH FIRST TWO CO-ROTATING AND THIRD ROTATING IN AN OPPOSED DIRECTION**
GETRIEBETURBOFAN MIT DREI TURBINEN, WOBEI DIE ERSTEN BEIDEN IN DIESELBE RICHTUNG ROTIEREN UND DIE DRITTE IN EINE GEGENLÄUFIGE RICHTUNG ROTIERT
TURBORÉACTEUR DOUBLE FLUX À ENGRENAGES À TROIS TURBINES, LES DEUX PREMIÈRES CO-ROTATIVES ET UNE TROISIÈME TOURNANT DANS UN SENS OPPOSÉ

(30) Priority: 02.04.2012 US 201213437290
(43) Date of publication of application: 11.02.2015
(73) Proprietor: Raytheon Technologies Corporation, Farmington, CT 06032 (US)
(72) Inventor: SCHWARZ, Frederick M., Glastonbury, Connecticut 06033 (US); KUPRATIS, Daniel Bernard, Wallingford, Connecticut 06492 (US)
(74) Representative: Dehns
(86) International application number: PCT/US2013/034539
(87) International publication number: WO 2014/007897

(56) References cited:
- US-A- 5 010 729
- US-A1- 2006 090 450
- US-A1- 2008 022 692
- US-A1- 2008 098 717
- US-A1- 2008 148 708
- US-A1- 2009 151 317
- US-A1- 2009 151 317
- US-A1- 2010 154 384
- US-A1- 2011 056 208
- US-A1- 2011 309 187

## Description

### BACKGROUND

This application relates to a gas turbine having three turbine sections, with one of the turbine sections driving a fan through a gear change mechanism.

Gas turbine engines are known, and typically include a compressor section compressing air and delivering the compressed air into a combustion section. The air is mixed with fuel and combusted, and the product of that combustion passes downstream over turbine rotors.

In one known gas turbine engine architecture, there are two compressor rotors in the compressor section, and three turbine rotors in the turbine section. A highest pressure turbine rotates a highest pressure compressor. An intermediate pressure turbine rotates a lower pressure compressor, and a third turbine section is a fan drive turbine which drives the fan.

### SUMMARY

In a featured embodiment, a gas turbine engine is provided in accordance with claim 1.

These and other features of the invention would be better understood from the following specifications and drawings, the following of which is a brief description.

### BRIEF DESCRIPTION OF THE DRAWINGS

Figure 1 schematically shows a gas turbine engine.
Figure 2 shows how a volume of the turbine section can be calculated.

### DETAILED DESCRIPTION

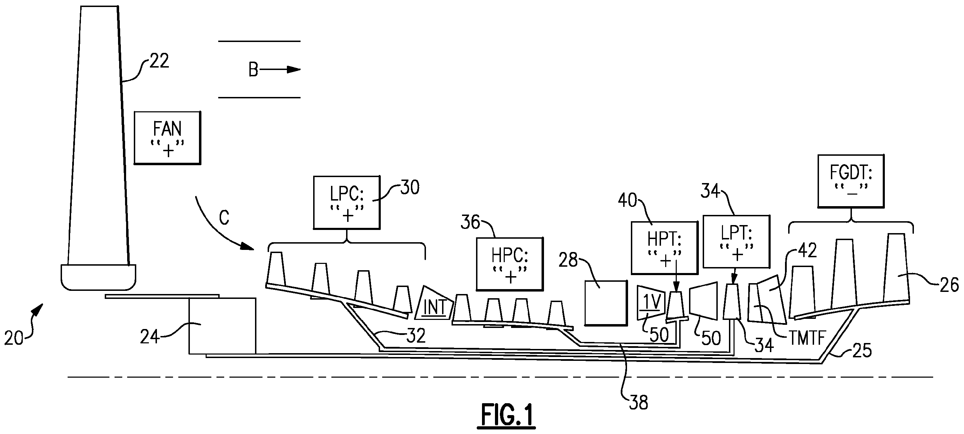

A gas turbine engine 20 is illustrated in Figure 1, and incorporates a fan 22 driven through a gear reduction 24. The gear reduction 24 is driven with a low speed spool 25 by a fan/gear drive turbine ("FGDT") 26. Air is delivered from the fan as bypass air B, and into a low pressure compressor 30 as core air C. The air compressed by the low pressure compressor 30 passes downstream into a high pressure compressor 36, and then into a combustion section 28. From the combustion section 28, gases pass across a high pressure turbine 40, low pressure turbine 34, and fan/gear drive turbine 26.

A plurality of vanes and stators 50 may be mounted between the several turbine sections. In particular, as shown, the low pressure compressor 30 rotates with an intermediate pressure spool 32 and the turbine 34 in a first ("+") direction. The fan drive turbine 26 rotates with a shaft 25 in an opposed second ("-") direction as the low pressure spool 32. The speed change gear 24 may cause the fan 22 to rotate in an opposed, second ("+") direction. However, the fan rotating in the same direction (the first direction) would come within the scope of this invention. As is known within the art and as illustrated, a star gear arrangement may be utilized for the fan to rotate in an opposite direction as to the fan/gear drive turbine 26. On the other hand, a planetary gear arrangement may be utilized in the illustrated embodiment, wherein the two rotate in the same direction. The high pressure compressor 36 rotates with a spool 38 and is driven by a high pressure turbine 40 in the first direction ("+").

Since the turbines 34 and 40 are rotating in the same direction, a first type of vane 50 is incorporated between these two sections. Vane 50 is a highly cambered vane, and may be used in combination with a mid-turbine frame. On the other hand, since the low pressure turbine 34 and fan drive turbine 26 are rotating in opposed directions, an air turning vane 42 is positioned between these two sections. The turning vane 42 may be incorporated into a mid-turbine frame as an air turning mid-turbine frame ("tmtf') vane.

The fan drive turbine 26 in this arrangement can operate at a higher speed than other fan drive turbine arrangements. The fan drive turbine can have shrouded blades, which provides design freedom.

The low pressure compressor may have more than three stages. The fan drive turbine has at least two, and up to six stages. The high pressure turbine as illustrated may have one or two stages, and the low pressure turbine may have one or two stages.

The above features achieve a more compact turbine section volume relative to the prior art, including both the high and low pressure turbines. A range of materials can be selected. As one example, by varying the materials for forming the low pressure turbine, the volume can be reduced through the use of more expensive and more exotic engineered materials, or alternatively, lower priced materials can be utilized. In three exemplary embodiments the first rotating blade of the fan drive turbine can be a directionally solidified casting blade, a single crystal casting blade or a hollow, internally cooled blade. All three embodiments will change the turbine volume to be dramatically smaller than the prior art by increasing low pressure turbine speed.

Due to the compact turbine section, a power density, which may be defined as thrust in pounds force produced divided by the volume of the entire turbine section, may be optimized. The volume of the turbine section may be defined by an inlet of a first turbine vane in the high pressure turbine to the exit of the last rotating airfoil in the fan/gear drive turbine 26, and may be expressed in cubic inches. The static thrust at the engine's flat rated Sea Level Takeoff condition divided by a turbine section volume is defined as power density. The sea level take-off flat-rated static thrust may be defined in pounds force, while the volume may be the volume from the annular inlet of the first turbine vane in the high pressure turbine to the annular exit of the downstream end of the last rotor section in the fan drive turbine. The maximum thrust may be sea level take-off thrust "SLTO thrust" which is commonly defined as the flat-rated static thrust produced by the turbofan at sea-level.

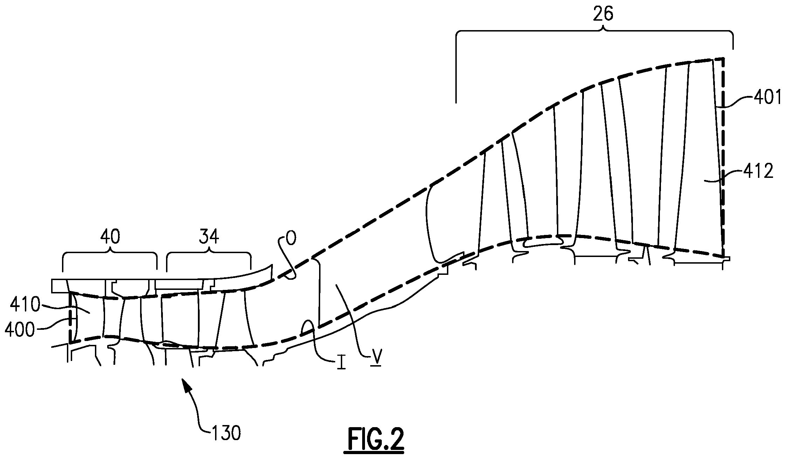

The volume V of the turbine section may be best understood from Figure 2. The high pressure turbine is illustrated at 40, the low pressure turbine at 34 and the fan drive turbine at 26. The volume V is illustrated by dashed line, and extends from an inner periphery I to an outer periphery O. The inner periphery is somewhat defined by the flowpath of the rotors, but also by the inner platform flow paths of vanes. The outer periphery is defined by the stator vanes and outer air seal structures along the flowpath. The volume extends from a most upstream 400 end of the most upstream blade 410 in the high pressure turbine section 40, typically its leading edge, and to the most downstream edge 401 of the last rotating airfoil 412 in the fan drive turbine section 26. Typically, this will be the trailing edge of that airfoil 412. Mid-turbine frames and valves as illustrated in Figure 1 may be included.

The power density in the disclosed gas turbine engine is much higher than in the prior art. Eight exemplary engines are shown below which incorporate turbine sections and overall engine drive systems and architectures as set forth in this application, and can be found in Table I as follows:

**TABLE 1**

| Engine | Thrust SLTO | | Turbine section volume from the Inlet | | Thrust/turbine Section volume | |
|---|---|---|---|---|---|---|
| | (lbf) | (kN) | | | | |
| | | | (in³) | (m³) | (lbf/in³) | (kN/m³) |
| 1 | 17,000 | (75.62) | 3,859 | (0.06316) | 4.4 | (1197) |
| 2 | 23,300 | (103.64) | 5,330 | (0.08734) | 4.37 | (1187) |
| 3 | 29,500 | (131.22) | 6,745 | (0.11053) | 4.37 | (1187) |
| 4 | 33,000 | (146.79) | 6,745 | (0.11053) | 4.84 | (1328) |
| 5 | 96,500 | (429.25) | 31,086 | (0.50941) | 3.1 | (843) |
| 6 | 96,500 | (429.25) | 62,172 | (1.01882) | 1.55 | (421) |
| 7 | 96,500 | (429.25) | 46,629 | (0.76411) | 2.07 | (562) |
| 8 | 37,098 | (165.02) | 6,745 | (0.11053) | 5.50 | (1493) |

Thus, in embodiments, the power density would be greater than or equal to about 1.5 lbf/in³ (407.4 kN/m³). More narrowly, the power density would be greater than or equal to about 2.0 lbf/in³ (543.2 kN/m³).

Even more narrowly, the power density would be greater than or equal to about 3.0 lbf/in³ (814.8 kN/m³).

More narrowly, the power density is greater than or equal to about 4.0 lbf/in³ (1086.4 kN/m³).

Also, in embodiments, the power density is less than or equal to about 5.5 lbf/in³ (1493.8 kN/m³).

The engine 20 in one example is a high-bypass geared aircraft engine. The bypass ratio is the amount of air delivered into bypass path B divided by the amount of air into core path C. In a further example, the engine 20 bypass ratio is greater than about six (6), with an example embodiment being greater than ten (10), the geared architecture 24 is an epicyclic gear train, such as a planetary gear system or other gear system, with a gear reduction ratio of greater than about 2.3 and the fan/gear drive turbine section 26 has a pressure ratio that is greater than about 5. In one disclosed embodiment, the engine 20 bypass ratio is greater than about ten (10:1), the fan diameter is significantly larger than that of the low pressure compressor section 30, and the fan/gear drive turbine section 26 has a pressure ratio that is greater than about 5:1. In some embodiments, the high pressure turbine section 40 may have two or fewer stages. In contrast, the fan/gear drive turbine section 26, in some embodiments, has between two and six stages. Further the fan/gear drive turbine section 26 pressure ratio is total pressure measured prior to inlet of fan/gear drive turbine section 26 as related to the total pressure at the outlet of the fan/gear drive turbine section 26 prior to an exhaust nozzle. The geared architecture 24 may be an epicycle gear train, such as a planetary gear system or other gear system, with a gear reduction ratio of greater than about 2.5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ("TSFC"). TSFC is the industry standard parameter of the rate of lbm of fuel being burned per hour divided by lbf of thrust the engine produces at that flight condition. "Low fan pressure ratio" is the ratio of total pressure across the fan blade alone, before the fan exit guide vanes. The low fan pressure ratio as disclosed herein according to one non-limiting embodiment is less than about 1.45. "Low corrected fan tip speed" is the actual fan tip speed in ft/sec divided by an industry standard temperature correction of [(Ram Air Temperature deg R) / 518.7)^0.5]. The "Low corrected fan tip speed" as disclosed herein according to one non-limiting embodiment is less than about 1150 ft / second (350.5 m/s). Further, the fan 22 may have 26 or fewer blades.

Engines made with the disclosed architecture, and including turbine sections as set forth in this application, and with modifications coming from the scope of the claims in this application, thus provide very high efficient operation, and increased fuel efficiency and lightweight relative to their trust capability.

Although an embodiment of this invention has been disclosed, a worker of ordinary skill in this art would recognize that certain modifications would come within the scope of this invention, which is defined by the appended claims.

## Claims

1. A gas turbine engine (20) comprising:
a fan rotor (22), a first compressor rotor (30) and a second compressor rotor (36), said second compressor rotor (36) compressing air to a higher pressure than said first compressor rotor (30);
a first turbine rotor (40), said first turbine rotor (40) driving said second compressor rotor (36), and a second turbine rotor (34), said second turbine rotor (34) driving said first compressor rotor (30); and
a fan drive turbine (26) positioned downstream of said second turbine rotor (34), said fan drive turbine (26) driving said fan rotor (22) through a gear reduction (24); and
said first compressor rotor (30) and said second turbine rotor (34) rotating as an intermediate speed spool (32), and said second compressor rotor (36) and said first turbine rotor (40) rotating together as a high speed spool (38),
**characterised in that**:
said high speed spool (38) rotates in the same direction as said intermediate speed spool (32), and a highly cambered vane (50) is positioned between said first turbine rotor (40) and said second turbine rotor (34); and
said fan drive turbine (26) rotates in an opposed direction to said intermediate speed spool (32), and an air turning vane (42) is positioned between said second turbine rotor (34) and said fan drive turbine (26).

2. The engine (20) as set forth in claim 1, wherein said fan rotor (22) is driven by said gear reduction (24) to rotate in the same direction as said intermediate speed spool (32).

3. The engine (20) as set forth in claim 1 or 2, wherein said fan rotor (22) delivers a portion of air into a bypass duct and a portion of air into said first compressor rotor (30) as core flow.

4. The engine (20) as set forth in any preceding claim, wherein a mid-turbine frame is positioned between said first and second turbine rotors (40, 34).

5. The engine (20) as set forth in claim 4, wherein the highly cambered vane (50) is positioned between said mid-turbine frame and said second turbine rotor (34).

6. The engine (20) as set forth in any preceding claim, wherein the turning vane (42) is incorporated into a mid-turbine frame (TMTF), positioned between said second turbine rotor (34) and said fan drive turbine (26), as an air turning mid-turbine frame vane.

## Patentansprüche

1. Gasturbinentriebwerk (20), umfassend:
einen Fanrotor (22), einen ersten Kompressorrotor (30) und einen zweiten Kompressorrotor (36), wobei der zweite Kompressorrotor (36) Luft auf einen höheren Druck als der erste Kompressorrotor (30) komprimiert;
einen ersten Turbinenrotor (40), wobei der erste Turbinenrotor (40) den zweiten Kompressorrotor (36) antreibt, und einen zweiten Turbinenrotor (34), wobei der zweite Turbinenrotor (34) den ersten Kompressorrotor (30) antreibt; und
eine Fanantriebsturbine (26), die stromabwärts des zweiten Turbinenrotors (34) positioniert ist, wobei die Fanantriebsturbine (26) den Fanrotor (22) durch eine Untersetzung (24) antreibt; und
wobei der erste Kompressorrotor (30) und der zweite Turbinenrotor (34) als eine Stufe (32) mit mittlerer Geschwindigkeit rotieren und der zweite Kompressorrotor (36) und der erste Turbinenrotor (40) zusammen als eine Stufe (38) mit hoher Geschwindigkeit rotieren,
**dadurch gekennzeichnet, dass**:
die Stufe (38) mit hoher Geschwindigkeit in derselben Richtung wie die Stufe (32) mit mittlerer Geschwindigkeit rotiert und eine stark gewölbte Leitschaufel (50) zwischen dem ersten Turbinenrotor (40) und dem zweiten Turbinenrotor (34) positioniert ist; und
die Fanantriebsturbine (26) in entgegengesetzter Richtung zu der Stufe (32) mit mittlerer Geschwindigkeit rotiert und eine Luftumlenkleitschaufel (42) zwischen dem zweiten Turbinenrotor (34) und der Fanantriebsturbine (26) positioniert ist.

2. Triebwerk (20) nach Anspruch 1, wobei der Fanrotor (22) durch das Untersetzungsgetriebe (24) so angetrieben wird, dass er in der gleichen Richtung wie die Stufe (32) mit mittlerer Geschwindigkeit rotiert.

3. Triebwerk (20) nach Anspruch 1 oder 2, wobei der Fanrotor (22) einen Teil der Luft in einen Umgehungskanal und einen Teil der Luft in den ersten Kompressorrotor (30) als Kernströmung leitet.

4. Triebwerk (20) nach einem der vorhergehenden Ansprüche, wobei ein Mittelturbinenrahmen zwischen dem ersten und dem zweiten Turbinenrotor (40, 34) positioniert ist.

5. Triebwerk (20) nach Anspruch 4, wobei die stark gewölbte Leitschaufel (50) zwischen dem mittleren Turbinengehäuse und dem zweiten Turbinenrotor (34) positioniert ist.

6. Triebwerk (20) nach einem der vorhergehenden Ansprüche, wobei die Umlenkleitschaufel (42) in einen Mittelturbinenrahmen (TMTF), der zwischen dem zweiten Turbinenrotor (34) und der Fanantriebsturbine (26) positioniert ist, als Luftumlenkleitschaufel in der Mitte des Turbinenrahmens eingebaut ist.

## Revendications

1. Moteur à turbine à gaz (20) comprenant :
un rotor de soufflante (22), un premier rotor de compresseur (30) et un second rotor de compresseur (36), ledit second rotor de compresseur (36) comprimant l'air à une pression plus élevée que ledit premier rotor de compresseur (30) ;
un premier rotor de turbine (40), ledit premier rotor de turbine (40) entraînant ledit second rotor de compresseur (36), et un second rotor de turbine (34), ledit second rotor de turbine (34) entraînant ledit premier rotor de compresseur (30) ; et
une turbine d'entraînement de soufflante (26) positionnée en aval dudit second rotor de turbine (34), ladite turbine d'entraînement de soufflante (26) entraînant ledit rotor de soufflante (22) par l'intermédiaire d'un démultiplicateur (24) ; et
ledit premier rotor de compresseur (30) et ledit second rotor de turbine (34) tournant comme un corps à vitesse intermédiaire (32), et ledit second rotor de compresseur (36) et ledit premier rotor de turbine (40) tournant ensemble comme un corps à grande vitesse (38),
**caractérisé en ce que** :
ledit corps à grande vitesse (38) tourne dans la même direction que ledit corps à vitesse intermédiaire (32), et une aube fortement cambrée (50) est positionnée entre ledit premier rotor de turbine (40) et ledit second rotor de turbine (34) ; et
ladite turbine d'entraînement de soufflante (26) tourne dans une direction opposée audit corps à vitesse intermédiaire (32), et une aube de rotation d'air (42) est positionnée entre ledit second rotor de turbine (34) et ladite turbine d'entraînement de soufflante (26).

2. Moteur (20) selon la revendication 1, dans lequel ledit rotor de soufflante (22) est entraîné par ledit démultiplicateur (24) pour tourner dans la même direction que ledit corps à vitesse intermédiaire (32).

3. Moteur (20) selon la revendication 1 ou 2, dans lequel ledit rotor de soufflante (22) délivre une partie d'air dans un conduit de dérivation et une partie d'air dans ledit premier rotor de compresseur (30) en tant que flux central.

4. Moteur (20) selon une quelconque revendication précédente, dans lequel un châssis de turbine médiane est positionné entre lesdits premier et second rotors de turbine (40, 34).

5. Moteur (20) selon la revendication 4, dans lequel l'aube fortement cambrée (50) est positionnée entre ledit châssis de turbine médiane et ledit second rotor de turbine (34).

6. Moteur (20) selon une quelconque revendication précédente, dans lequel l'aube de rotation (42) est incorporée dans un châssis de turbine médiane (TMTF), positionné entre ledit second rotor de turbine (34) et ladite turbine d'entraînement de soufflante (26), en tant qu'aube de châssis de turbine médiane de rotation d'air.
